# EUROPÄISCHE PATENTSCHRIFT

(11) **EP 2 542 865 B1**
(45) Veröffentlichungstag und Bekanntmachung des Hinweises auf die Patenterteilung: **01.01.2014**
(21) Anmeldenummer: 10709396.5
(22) Anmeldetag: 01.03.2010
(51) Int. Cl.: G01D 11/02, F16C 32/04, H02K 11/00

(54) **LAGERSTROMSENSORVORRICHTUNG MIT ENERGIEWANDLER**
BEARING CURRENT SENSOR WITH ENERGY CONVERTER
CAPTEUR DE COURANT PALIER AVEC CONVERTISSEUR D'ÉNERGIE

(43) Veröffentlichungstag der Anmeldung: 09.01.2013
(73) Patentinhaber: Siemens Aktiengesellschaft, 80333 München (DE)
(72) Erfinder: HASSEL, Jörg, 91058 Erlangen (DE); SCHMIDT, Richard, 91083 Baiersdorf (DE); STECKENBORN, Arno, 13589 Berlin (DE); THEILE, Oliver, 13437 Berlin (DE)
(86) Internationale Anmeldenummer: PCT/EP2010/001257
(87) Internationale Veröffentlichungsnummer: WO 2011/107108

(56) Entgegenhaltungen:
- DE-A1-102008 035 613
- US-A1- 2005 150 281

## Beschreibung

Die vorliegende Erfindung betrifft eine Sensorvorrichtung zum Montieren an oder auf eine Welle einer elektrischen Maschine mit einer Erfassungseinrichtung zum Erfassen eines Lagerstroms der elektrischen Maschine.

Lagerströme treten häufig bei Umrichter-gespeisten elektrischen Maschinen auf. Sie führen innerhalb kürzester Zeit zu einer Schädigung des Kugel- oder Wälzlagers und damit zum Ausfall des Antriebs. Zur Erfassung von Lagerströmen werden daher fest montierte Sensorsysteme eingesetzt. Diese sollen den Antrieb fortlaufend überwachen. Da die Lagerströme im realen Betrieb einer Anlage nicht direkt gemessen werden können, detektieren die vorgeschlagenen Lagerstromsensoren das Auftreten von Lagerströmen über eine Erfassung des elektrischen Wellenpotentials der Maschine. Hierzu wird entweder ein Schleifkontakt (Bürste) oder eine kontaktlose Ankopplung (z. B. mittels kapazitiver Kopplung) verwendet. Die kontaktlose Ankopplung weist den Vorteil der Verschleißfreiheit bzw. Wartungsfreiheit auf.

Ein derartiges Sensorsystem benötigt für den Betrieb eine Energieversorgung. Beim Anbringen eines Lagerstromsensors an einer Motorwelle oder einem Wellenlager ergibt sich daher die Frage, wie der Sensor mit Energie versorgt werden kann.

Eine Energieversorgung aus dem Lastkreis (Stromversorgung des Motors) ist wegen der oftmals vorliegenden hohen Spannungen und Leistungen nur mit großem Aufwand möglich. Eine weitere Möglichkeit der Energieerzeugung bietet sich an durch die Nutzung von elektromagnetischen Feldern in der unmittelbaren Umgebung der elektrischen Maschine. Letztere werden im Zuge der Optimierung von Streuverlusten immer weniger und werden damit schwieriger zu nutzen.

Zur Energieversorgung von motornaher Sensorik werden derzeit üblicherweise Batterien oder installierte Netzteile verwendet. Durch diese Lösungen ergeben sich ein erhöhter Wartungsaufwand oder zusätzliche Installationskosten.

Insgesamt gliedert sich ein Sensorsystem zur Erfassung des Lagerstroms typischerweise in folgende Komponenten: Ankopplung, Sensor, Auswerteeinheit, Stromversorgung bzw. Batterie. Diese werden in der Regel durch mehrere getrennte Baueinheiten bzw. Geräte realisiert.

Dokument US 2005/0150281 zeigt eine Sensorvorrichtung zur Ermittlung der Winkellage einer Kurbelwelle, wobei der elektromagnetische Sensor auf strukturelle Eigenschaften des rotierenden Zahnkranzes reagiert. Der Sensor ist dabei mit einer Energiewandlereinrichtung verbunden, welche weiterhin eine wiederaufladbare Batterie umfasst. Diese Sensorvorrichtung ermittelt keine Lagerströme, ist nicht auf oder an einer Welle montiert, besitzt keine ringförmige Gestalt und die Energiewandlereinheit besitzt keine magnetischen oder magnetisierbaren Elemente welche daher auch nicht mechanisch an der Welle koppelbar oder Bestandteil der Welle sind.

Dokument DE 10 2008 035 613 A1 beschreibt einen Sensor zur Erfassung des Lagerstroms in einer elektrischen Maschine, welcher eine in einem Abstand zur Welle (Spalt) angeordnete Elektrode umfasst, welche im Falle einer zeitlichen Änderung der anliegenden Spannung ein Messsignal (durch Messkapazität) erzeugt. Die Elektrode weist dabei vorzugsweise eine kreisförmige Innenkontur auf, so dass der Spalt ringformig ist. Dieser Sensor ist nicht auf oder an der Welle montiert, besitzt keine (ring)scheibenförmige Gestalt und die Energiewandlereinheit besitzt keine magnetischen oder magnetisierbaren Elemente welche daher auch nicht mechanisch an der Welle koppelbar oder Bestandteil der Welle sind.

Die mit der vorliegenden Erfindung zu lösende Aufgabe kann somit darin gesehen werden, den Aufwand zur Erfassung von Lagerströmen elektrischer Maschinen zu reduzieren.

Erfindungsgemäß wird diese Aufgabe durch eine Sensorvorrichtung nach Anspruch 1 gelöst.

In vorteilhafter Weise ist es so möglich, während des Betriebs der elektrischen Maschine autark elektrische Energie für die Erfassungseinrichtung zu gewinnen. Es liegt außerdem eine Sensorvorrichtung vor, die unabhängig von äußerer Energieversorgung als Modul, d. h. als ein einziges kompaktes Bauteil, leicht austauschbar bzw. nachrüstbar ist.

Vorzugsweise sind die Erfassungseinrichtung und die Energiewandlereinrichtung in einem gemeinsamen Gehäuse untergebracht. Mit dem gemeinsamen Gehäuse wird die Modularität der Sensorvorrichtung weiter unterstrichen und das Gehäuse bietet außerdem Schutz sowohl für die Erfassungseinrichtung als auch die Energiewandlereinrichtung.

Die Sensorvorrichtung kann im Wesentlichen ringscheibenförmige Gestalt besitzen und konzentrisch mit der Welle der elektrischen Maschine auf oder an diese montierbar sein. Durch die scheibenförmige Gestalt benötigt sie axial nur sehr wenig Bauraum.

Des Weiteren ist die Erfassungseinrichtung zur kapazitiven Aufnahme des Lagerstroms ausgebildet. Damit ist ein verschleißfreies Erfassen des Lagerstroms bzw. einer dafür charakteristischen Spannung möglich.

Alternativ kann die Erfassungseinrichtung zur Erfassung des Lagerstroms auch eine Bürste aufweisen, um mit einem Schleifring auf der Welle oder der Welle selbst galvanischen Kontakt herzustellen. Damit lässt sich der Ladestrom unter Umständen direkt messen.

In einer weiteren Ausführungsform kann die Sensorvorrichtung eine Schnittstelleneinrichtung zur drahtlosen Übertragung von Daten der Erfassungseinrichtung besitzen. Damit reduziert sich auch der Montageaufwand der Sensorvorrichtung, da keine Kabel zur Datenübertragung verlegt werden müssen.

Ferner besitzt die Energiewandlereinrichtung einen induktiven Aufnehmer und magnetische oder magnetisierbare Elemente, die mechanisch an die Welle koppelbar oder Bestandteil der Welle sind. Damit wird das übliche Generatorprinzip für die Erzeugung der elektrischen Energie verwendet.

Weiterhin kann die Sensorvorrichtung eine Leiterplatte als Träger mindestens jeweils einer Komponente der Erfassungseinrichtung und der Energiewandlereinrichtung aufweisen. Damit erhält der Träger zusätzlich die Funktion auch Träger von Signal verarbeitungs komponenten zu sein bzw. sein zu können. Es ist nämlich insbesondere von Vorteil, wenn die Sensorvorrichtung in ihrem Gehäuse auch eine Signalverarbeitungseinrichtung zur Verarbeitung der Signale der Erfassungseinrichtung aufweist. Damit können Lagerstromsignale in einem vorbestimmten Format ausgegeben werden.

Wie oben bereits angedeutet wurde, besteht eine besonders bevorzugte Anwendung der Sensorvorrichtung darin, sie für eine elektrische Maschine oder eine daran angeschlossene Lastmaschine mit einer drehbaren Welle einzusetzen.

Die vorliegende Erfindung wird nun anhand der beigefügten Zeichnungen näher erläutert, in denen zeigen:
- FIG 1: eine Prinzipskizze eines Motors mit einer daran angeschlossenen Lastmaschine;
- FIG 2: einen Scheibengenerator;
- FIG 3: einen erfindungsgemäß in einen Scheibengenerator integrierten Lagerstrom-Detektor und
- FIG 4: einen Energiewandler mit Induktivgeber und Zahnscheibe.

Die nachfolgend näher geschilderten Ausführungsbeispiele stellen bevorzugte Ausführungsformen der vorliegenden Erfindung dar. Grundlegender Gedanke der vorliegenden Erfindung ist, dass mechanische Rotationsenergie an einer Welle einer elektrischen Maschine 1 oder einer daran angekoppelten Lastmaschine 2 im Betriebsfall stets in ausreichender Fülle vorhanden ist. Diese Energiequelle soll daher in Verbindung mit den für die Sensorik zur Lagerstromdetektion erforderlichen Komponenten genutzt werden.

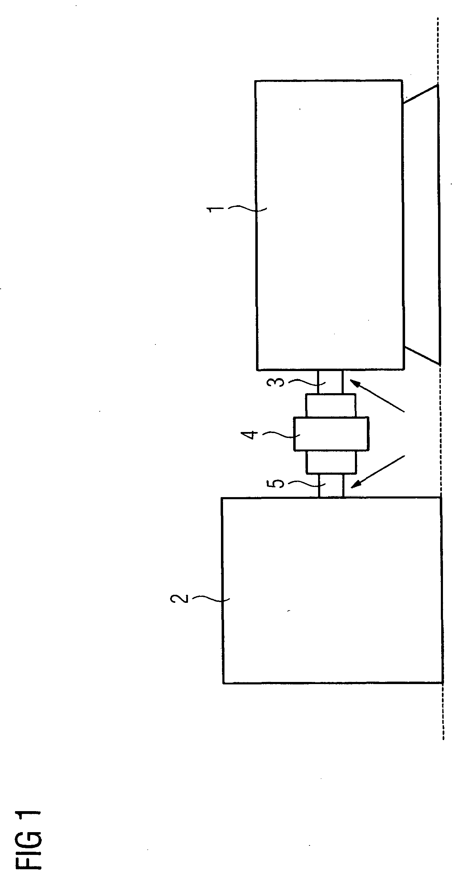

FIG 1 zeigt eine typische Antriebskonfiguration bestehend aus dem Motor 1, der Lastmaschine 2, der Antriebswelle 3 des Motors sowie einer Wellenkupplung 4 und der Welle 5 der Lastmaschine 2. Mit Pfeilen sind in FIG 1 mögliche Montagestellen für einen Lagerstromsensor an der Antriebswelle 2 und der Welle 5 gekennzeichnet.

Das Problem der Energieversorgung eines Lagerstromsensors sowie der Integration der verschiedenen erforderlichen Gerätefunktionen in einem Gebilde wird durch Nutzung sowohl des induktiv-generatorischen Prinzips als auch einer konstruktionsbedingten kapazitiven Kopplung zwischen der drehenden Welle und der Sensor-Elektronik gelöst werden. Da die Sensor-Elektronik nur eine relativ geringe Leistungsaufnahme aufweist, kann die Vorrichtung zur Umwandlung der mechanischen Drehenergie in elektrische Energie so aufgebaut und ausgelegt werden, dass nicht die Erzielung eines hohen energetischen Wirkungsgrads im Vordergrund steht, sondern der Effekt einer kapazitiven Kopplung zum elektrischen Potential der Motorwelle besonders ausgenutzt wird.

Wird auf der Welle der elektrischen Maschine eine Struktur (Ring, Scheibe, Einprägung ins Wellenmaterial) aufgebracht, die bei Bewegung in ihrer Nähe einen veränderlichen magnetischen Fluss erzeugt (Zahnstruktur, Wellenstruktur, eingeprägte Magnetisierung) und außen herum eine Ringstruktur oder ein isoliertes (Kunststoff-) Gehäuse mit integrierten Spulen angebracht, so können diese Spulen durch die magnetische Struktur auf der Welle angeregt werden und somit bei sich drehender Welle eine Generatorfunktion übernehmen. Bekannte Beispiele hierfür sind Induktiv-Geber oder auch Scheibengeneratoren.

Zugleich kann ein auf dem Gehäuse aufgebrachter leitfähiger Streifen auch als Kondensatorstruktur dienen, um das Lagerstrom-Signal kapazitiv abzugreifen. Diese Lösung bietet eine verschleißfreie Möglichkeit zur Erfassung des elektrischen Wellenpotentials.

Durch die vorgeschlagene Lösung kann somit ein kompaktes, energieautarkes Gerät zur Lagerstrom-Detektion aufgebaut werden, welches sich durch eine scheibenförmige Außenkontur auch an schwer zugänglichen Wellen oder kurzen Wellenstümpfen anbringen lässt und welches sich in hoher Schutzart ausführen lässt.

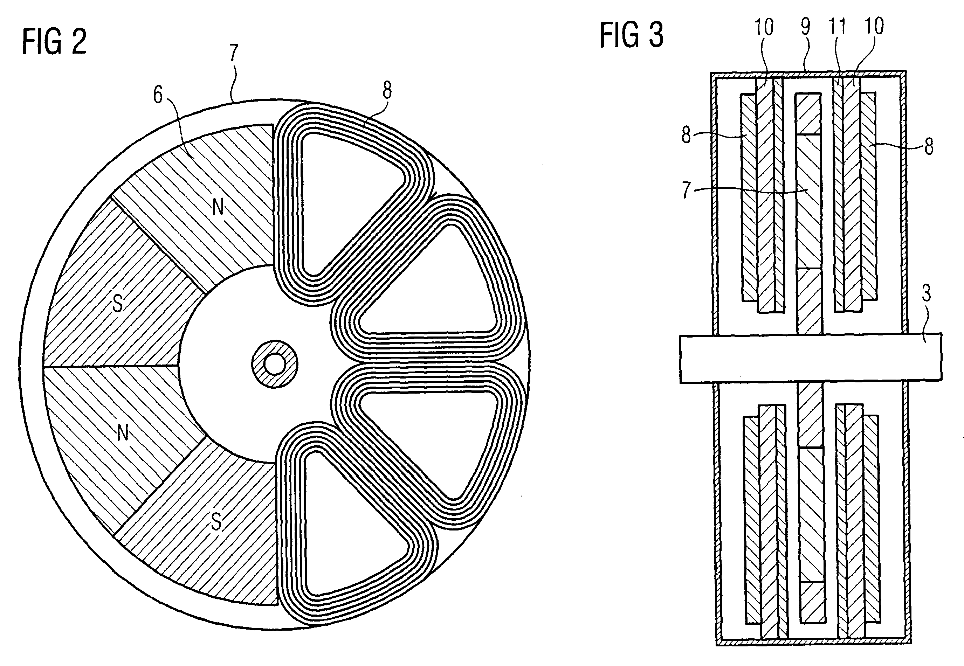

Ein konkretes Beispiel eines für die Erzeugung der elektrischen Energie für den Lagerstromsensor gut nutzbaren Generators ist in FIG 2 wiedergegeben. Es handelt sich hier um einen achtpoligen Scheibengenerator, wie er z. B. für kleine Windkraftanlagen verwendet wird. Der Scheibengenerator besitzt eine auf die jeweilige Welle montierbare Scheibe mit am Umfang verteilten magnetischen Polen 6. In einem axialen Abstand zu der Scheibe befinden sich über die gesamte Scheibe verteilt, im vorliegenden Beispiel acht Spulen 3. Aus Darstellungsgründen sind in FIG 2 in der linken Hälfte der axialen Ansicht des Scheibengenerators vier der insgesamt acht Pole 6 auf der Generatorscheibe 7 dargestellt. Auf der rechten Hälfte der Darstellung von FIG 2 sind vier der acht Spulen 8 wiedergegeben.

FIG 3 zeigt nun den Scheibengenerator von FIG 2 integriert in eine Sensorvorrichtung zur Erfassung eines Lagerstroms. Bei der Darstellung von FIG 3 handelt es sich um eine Schnittdarstellung entlang der Achse der Welle 3. Auf der Welle 3 befindet sich die mitrotierende metallische oder metallisierte Scheibe 7, die mit magnetischen Zonen oder integrierten Magneten (Pole 6) versehen ist. Die rotierende Scheibe 7 des Scheibengenerators ist von einem feststehenden Gehäuse 9 umgeben. In diesem Gehäuse 9 sind auch Spulenträger 10 axial vor und hinter der rotierenden Scheibe 7 untergebracht. Diese sind beispielsweise aus Leiterplattenmaterial aufgebaut und tragen die Luftspulen 8. Es befinden sich also beidseitig der rotierenden Scheibe 7 Luftspulenanordnungen, wie sie in der rechten Hälfte von FIG 2 zur Hälfte angedeutet sind. Die Luftspulen können konventionell oder in Form gedruckter Leiterbahnen realisiert werden.

Die der rotierenden Scheibe 7, d. h. dem Polrad, zugewandte Seite jedes Spulenträgers 10 soll als Kondensatorfläche eines kapazitiven Lagerstromsensors bewirken (die rotierende Scheibe wirkt als andere Kondensatorplatte). Deshalb sind die Spulenträger 10 dort mit einem elektrisch leitenden Material 11 beschichtet. Diese Beschichtung kann beispielsweise eine durchgängige Kupferfläche auf der jeweiligen Leiterplatte bzw. dem jeweiligen Spulenträger 10 sein. Der Kondensator bestehend aus der rotierenden Scheibe 7 und der metallischen Trägerbeschichtung 11 dient als Erfassungseinrichtung zur Erfassung eines Lagerstroms.

Anstelle der kapazitiven Kopplung kann auch ein galvanischer Kontakt mit der rotierenden Scheibe hergestellt werden. Der galvanische Kontakt kann beispielsweise mit Hilfe von Schleifkontakten oder Karbonfaserbürsten realisiert werden.

Die als Träger 10 verwendete feststehende Leiterplatte kann in konventioneller Weise zusätzlich mit elektrischen und elektronischen Bauelementen bestückt werden. Mit diesen Schaltungsteilen kann die für die Stromversorgung erforderliche Gleichrichtung und Spannungskonditionierung, die analoge und digitale Signalaufbereitung sowie die Datenkommunikation mit den übergeordneten System realisiert werden.

Durch diese integrierte Anordnung wird die Funktion eines Energiewandlers, die der Signal-Ankopplung zur Erfassung des Wellenpotentials sowie die analoge oder digitale Signalauswertung in einer Baueinheit verwirklicht.

Bei der erfindungsgemäßen Verknüpfung und Kombination von Sensorfunktion mit der Energieversorgung ist ein energieautarkes Sensorsystems realisiert. Es ergeben sich damit insbesondere folgende Vorteile:
- Da die Lagerstromüberwachung nur bei sich drehenden Wellen benötigt wird, fällt der Zustand der Energieerzeugung genau mit der erforderlichen Betriebsbereitschaft des Sensorsystems zusammen. Es ist daher keine oder nur in geringem Maße eine Energiespeicherung zur Überbrückung von Stillstandszeiten notwendig.
- Zudem sind diese Sensorsysteme mit einer drahtgebundenen oder drahtlosen (Funk-) Kommunikation zu einem übergeordneten System versehen, so dass in der Regel keine Messwerte oder sonstigen Daten während einer Stillstandszeit der Maschine über einen längeren Zeitraum nicht flüchtig gespeichert werden müssen.

- Da keine externe Stromversorgung an das Sensorsystem herangeführt werden muss, wird der Installationsaufwand reduziert.
- Wenn die Messdaten über eine Funkschnittstelle abgegeben werden, ist keinerlei Verdrahtungsaufwand erforderlich.
- Der Wegfall externer Kabelanschlüsse an dem Gerät erleichtert eine Ausführung in hoher Schutzart (z. B. Staubschutz, Spritzwasserschutz).
- Bei geeignetem Aufbau des Systems ist die Nachrüstung möglich, ohne an der bestehenden Installation Veränderungen vornehmen zu müssen. Hierzu gehört eine Teilbarkeit des Geräts, um die Nachrüstung ohne Demontage des Antriebs oder der Wellenkupplung ausführen zu können.
- Wegen der möglichen kleinen Aufbauform und der Wartungsfreiheit aufgrund des energieautarken Betriebs kann das Sensorsystem in entsprechend vorbereitete Maschinen integriert werden. Auch hier ist eine scheibenförmige Kontur von Vorteil, da die Platzverhältnisse in der Nähe des Lagerschilds sehr beschränkt sind.

### Bezugszeichenliste

- 1: Motor
- 2: Lastmaschine
- 3: Antriebswelle
- 4: Wellenkupplung
- 5: Welle
- 6: Pole
- 7: Generatorscheibe
- 8, 17: Spulen
- 9, 15: Gehäuse
- 10: Spulenträger
- 11: elektrisch leitendes Material
- 12: Zahnscheibe
- 13: Induktivgeber
- 14: Motorgehäuse
- 16: elektrischer Anschluss
- 18: Weicheisenkern
- 19: Dauermagneten

## Patentansprüche

1. Sensorvorrichtung zum Montieren an oder auf eine Welle (3) einer elektrischen Maschine, die eine ringscheibenförmige Gestalt besitzt und konzentrisch mit der Welle (3) auf oder an diese montierbar ist, mit
- einer Erfassungseinrichtung (7, 11) zum Erfassen eines Lagerstroms der elektrischen Maschine, die zur kapazitiven Aufnahme des Lagerstroms ausgebildet ist, und mit
- einer Energiewandlereinrichtung (7, 8), die mit der Erfassungseinrichtung (7, 11) zu einem austauschbaren Modul zusammengebaut ist, zur Wandlung von mechanischer Energie der Welle (3) in elektrische Energie für die Erfassungseinrichtung (7, 11) wobei die Energiewandlereinrichtung (7, 8) einen induktiven Aufnehmer (17, 18, 19) und magnetische oder magnetisierbare Elemente (12) besitzt, die mechanisch an die Welle (3) koppelbar oder Bestandteil der Welle sind.

2. Sensorvorrichtung nach Anspruch 1, wobei die Erfassungseinrichtung (7, 11) und die Energiewandlereinrichtung (7, 8) in einem gemeinsamen Gehäuse (9) untergebracht sind.

3. Sensorvorrichtung nach einem der vorhergehenden Ansprüche, die eine Schnittstelleneinrichtung zur drahtlosen Übertragung von Daten der Erfassungseinrichtung (7, 11) besitzt.

4. Sensorvorrichtung nach einem der vorhergehenden Ansprüche, die eine Leiterplatte (10) als Träger mindestens jeweils einer Komponente der Erfassungseinrichtung (7, 11) und der Energiewandlereinrichtung (7, 8) aufweist.

5. Sensorvorrichtung nach Anspruch 1, die in dem Gehäuse (9) eine Signalverarbeitungseinrichtung zur Verarbeitung der Signale der Erfassungseinrichtung (7, 11) aufweist.

6. Elektrische Maschine mit einer drehbaren Welle (3) an oder auf die eine Sensorvorrichtung nach einem der vorhergehenden Ansprüche montiert ist.

## Claims

1. Sensor device for mounting at or on a shaft (3) of an electric machine which has an annular disk shape and can be mounted at or on the shaft (3) concentrically therewith, having
- a detection device (7, 11) for detecting a bearing current of the electric machine, which is designed for capacitive pick-up of the bearing current, and having
- an energy converter device (7, 8), which is combined with the detection device (7, 11) to produce an exchangeable module, for converting mechanical energy of the shaft (3) into electrical energy for the detection device (7, 11), wherein the energy converter device (7, 8) has an inductive pick-up (17, 18, 19) and magnetic or magnetisable elements (12) which can be mechanically linked to the shaft (3) or are a component part of the shaft.

2. Sensor device according to claim 1, wherein the detection device (7, 11) and the energy converter device (7, 8) are accommodated in a common housing (9).

3. Sensor device according to one of the preceding claims, which has an interfacing device for wireless transmission of data from the detection device (7, 11).

4. Sensor device according to one of the preceding claims, having a circuit board (10) as a carrier of at least one component of the detection device (7, 11) and of the energy converter device (7, 8) in each case.

5. Sensor device according to claim 1, having in the housing (9) a signal processing device for processing the signals from the detection device (7, 11).

6. Electric machine having a rotating shaft (3) at or on which a sensor device according to one of the preceding claims is mounted.

## Revendications

1. Dispositif capteur destiné au montage d'une machine électrique contre ou sur un arbre (3), laquelle machine possède une configuration de forme annulaire et peut être montée de manière concentrique sur ou contre l'arbre (3), comprenant
- un système de détection (7, 11) destiné à détecter un courant de palier de la machine électrique, qui est configuré pour capter de manière capacitive le courant de palier, et comprenant
- un système de transformation d'énergie (7, 8) qui est assemblé avec le système de détection (7, 11) pour former un module remplaçable, destiné à transformer l'énergie mécanique de l'arbre (3) en énergie électrique pour le système de détection (7, 11), dans lequel le système de transformation d'énergie (7, 11) possède un capteur inductif (17, 18, 19) et des éléments magnétiques ou magnétisables (12) qui peuvent être couplés mécaniquement à l'arbre (3) ou qui sont un élément de l'arbre.

2. Dispositif capteur selon la revendication 1, dans lequel le système de détection (7, 11) et le système de transformation d'énergie (7, 8) sont logés dans un boîtier commun (9).

3. Dispositif capteur selon l'une des revendications précédentes, qui possède un dispositif d'interface pour la transmission sans fil de données du dispositif de détection (7, 11).

4. Dispositif capteur selon l'une des revendications précédentes, qui présente une carte de circuit imprimé (10) comme support d'au moins respectivement un composant du système de détection (7, 11) et du système de transformation d'énergie (7, 8).

5. Dispositif capteur selon la revendication 1, qui présente dans le boîtier (9) un système de traitement de signaux pour le traitement des signaux du système de détection (7, 11).

6. Machine électrique comprenant un arbre rotatif (3) contre ou sur lequel un dispositif capteur selon l'une des revendications précédentes est monté.
